# EUROPEAN PATENT SPECIFICATION

(11) **EP 0 802 069 B1**
(45) Date of publication and mention of the grant of the patent: **26.11.2003**
(21) Application number: 97302278.3
(22) Date of filing: 03.04.1997
(51) Int. Cl.: B42D 15/10, C08J 5/18, B32B 3/30, B29C 59/04, C08L 1/12

(54) **Plastics film and production thereof**
Folie aus Kunststoff und Herstellung davon
Film plastique et sa fabrication

(30) Priority: 04.04.1996 GB 9607203
(43) Date of publication of application: 22.10.1997
(73) Proprietor: Acordis Acetate Chemicals Limited, Spondon, Derby DE21 7BP (GB)
(72) Inventor: Hyman, Alan, Gamston, Nottingham NG2 6RR (GB); Wesson, David, Littleover, Derby DE3 7BP (GB); French, David, Buxton, Derbyshire SK17 6UD (GB); Braun, Francois, 93148 Bondy Cedex (FR); Willins, Gordon, Toton, Nottingham NG9 6XH (GB)
(74) Representative: Hale, Stephen Geoffrey

(56) References cited:
- WO-A-89/03760
- US-A- 4 298 976

## Description

This invention relates to plastics film useful for example for packaging or for lamination to paper or board to form packaging or promotional material. In particular, it relates to matt or semi-matt film, that is film having a 60° gloss of 5 (a full matt film) to 30 (a light semi-matt film) and having surprising additional properties. It also relates to laminated products containing such film as exterior layer, to the preparation of such products and of such film and to use of the film in a process for testing the authenticity of packaged goods.

Most plastics film, for example polyolefin, polyester or regenerated cellulose film, is made by extrusion; some, such as cellulose acetate film, is made by casting from solution. The process of the present invention is particularly suitable as a treatment of cast film but can also be applied to extruded film.

Most cellulose acetate film sold commercially is clear film of 60° gloss greater than 100. This clear film is produced by casting a solution of cellulose acetate, generally in acetone as solvent, onto a polished stainless steel endless belt or a chrome-plated drum. The cast film is dried (hardened) on the belt or drum until it is coherent enough to be stripped from the belt or drum, and it is then dried (hardened) further by passage around rollers in an oven to remove substantially all solvent. Matt film can be produced similarly by casting onto a roughened, for example shot-blasted, surface. Some semi-matt film is available commercially; it is believed to be produced by casting onto a lightly roughened surface. Semi-matt film preferably has a 60° gloss in the range 10 to 25, most preferably 12 to 20.

Embossing of plastics film is known for example from GB-A-2104847, GB-A-1493512, EP-A-604685, GB-A-995591, GB-A-1168490 and US-A-3316825. None of these patents relates to the treatment of cast cellulose acetate film.

GB Patent Application No 2,104,847 describes and claims an embossed thermoplastic polyolefin film having an embossed matt pattern, the thickness of the film being within the range of about 0.5 to about 1.5 mils and the embossed depth being about 0.5 to about 2.5 mils wherein the embossed pattern comprises a series of embossed lines parallel to free lengthwise edges of the film and a series of embossed transverse lines intersecting the parallel lines to provide an overall general network of the lines surrounding raised bosses on one side of the film, wherein the bosses and lines overlie on the opposite side of the film corresponding depressions and ridges, the embossed lines numbering within the range of about 150 to 300 lines per inch.

GB Patent No 1,493,512 describes and claims an embossed thermoplastic film wherein one surface thereof is provided with two groups of rows ofprotuberances, the first group of said rows extending substantially perpendicular to the second group of said rows, each of the first group of rows being separated from the next row of said first group by a continuous valley extending from one edge of the film to the opposite edge thereof, each of the second group of rows being separated from the next row of said second group by a plurality of aligned valleys, each of the aligned valleys having a length substantially equal to the dimension of the base of an adjacent protuberance in a direction perpendicular to the direction of the continuous valleys.

Published PCT Patent Application No WO89/03760 relates to a method of decoration of paper or plastic sheeting by providing a coating and then embossing the coated substrate. The coated sheet is heated to soften the coating by use of a heated platen or heated cylinders and infrared heaters. The softened sheet surface is then decorated using an embossing member to provide a diffraction pattern or hologram. The embossment pattern has a lesser depth than the surface roughness of the sheet before embossing.

In a process according to the invention for the preparation of a laminated product having a surface which is highly resistant to finger marking, clear plastics film in an unhardened condition is embossed by an embossing cylinder and is thereafter allowed to harden, the embossing according to one aspect of the invention being in a pattern of such depth, repeat distance and regularity that when the plastics film is rubbed it emits a noise of characteristic frequency and according to another aspect of the invention being in a pattern of such depth, repeat distance and regularity that the embossed plastics film is capable of giving rise to diffraction patterns, and the hardened, embossed film is laminated to paper or board with its embossed surface as the exterior layer of the resulting laminated product. For best results, clear plastics film is embossed by an embossing cylinder having a regular embossing pattern of depth 0.5 to 10 microns and repeat distance 20 to 400 microns, and the invention includes laminated products in which such a plastics film is laminated to paper or board substrate.

The invention also includes the use of a semi-matt plastics film as the outermost layer of laminated packaging on packaged goods, characterised in that the film has a regular embossed pattern of depth 0.5 to 10 microns and repeat distance 20 to 400 microns, the regularity of the embossed pattern being such that when the plastics film is rubbed, for example against itself, it emits a noise of characteristic frequency. Alternatively or additionally, the regularity of the embossed pattern is sufficient that the embossed film is capable of giving rise to a diffraction pattern.

The invention further includes a process as defined in claim 20 for the preparation of a matt or semi-matt plastics film.

The noise emitted by the film when rubbed, particularly when rubbed against itself, is highly distinctive and has been variously described as a wailing noise or as a twittering or crying noise. As far as we know, no other plastics film produces a noise of this type when rubbed. The characteristic frequency (pitch) of the noise is dependent on the embossed pattern of the film, most particularly on the repeat distance of the pattern. The distinctive noise is repeatable and reproduceable whenever the film is rubbed. The characteristic pitch is essentially the same whether the film is rubbed against itself or against other rigid or semi-rigid plastics material, wood, paperboard, metal or similar materials under a range of conditions. This distinctive noise means that the film can be used as a security packaging for expensive goods when applied as the exterior layer of the packaging, for example as a laminate over paperboard. If access to the film is restricted to reputable luxury goods manufacturers only, packages of genuine goods can be distinguished from fakes by gently rubbing the package, for example by rubbing two packages together. If supply of a film of particular embossed pattern is limited to one luxury goods manufacturer, the pitch of the noise generated is characteristic of the packaged goods of that manufacturer. One or both surfaces of the film can be embossed; usually it is preferred that only one surface is embossed, and this surface is arranged to be the outermost surface of any packaging material incorporating the film.

The capability of the embossed film to give rise to diffraction patterns can also be used in security packaging for testing the authenticity of packaged goods. In this case a laminated packaging material comprises a reflective layer with the embossed film of the invention being laminated outside the reflective layer so that the reflective layer is visible through the film. The reflective layer can for example be a metallised layer. If only one surface of the film is embossed, the opposite surface can be metallised. Alternatively, the metallised layer can be a substantially rigid layer such as metallised paperboard. The reflective layer can alternatively be a metallic foil, preferably laminated to a substantially rigid layer such as paperboard. Diffraction patterns can be seen if a patterned transparent material having a pattern of closely spaced lines, for example 0.5 to 0.02 mm apart, is placed over the package. The diffraction pattern observed is characteristic of the plastics film having a particular regular embossed pattern combined with the patterned transparent material used. The patterned transparent material can for example be a line grating used to measure the count of fabrics.

The clear plastics film used as starting material can for example be a cast film such as cast cellulose acetate film or can be an extruded film such as a polyolefin film, for example polyethylene or polypropylene, or a polyester film, for example polyethylene terephthalate, or a regenerated cellulose film. The film can contain any of the additives known for incorporation in clear film. Cellulose acetate film can for example contain a plasticiser, for example 10 to 25% by weight of a phthalate ester plasticiser such as diethyl phthalate. The process of the invention can be carried out as an in-line process following casting or extrusion of the clear film or can be carried out as a separate process on clear film which has been reeled up after production. The thickness of the film is generally in the range 5 to 200 microns, more usually 10 or 15 microns up to 50 or 100 microns. For example, film for lamination over print, e.g. for lamination over paperboard packaging, may have a thickness of 10 to 25 or 40 microns and film for other uses such as labels and seals may have a thickness of 25 to 75 microns.

The film in its unhardened condition is preferably softened, for example by applying a solvent or volatile plasticiser for the plastics to the film. For cellulose acetate film the preferred softener is acetone. The acetone content of the film as it is embossed is preferably in the range 1 to 5% by weight, most preferably 1.0 or 1.5% up to 2 or 4% by weight. The plastics film in its unhardened condition can alternatively be obtained by retaining sufficient solvent in a cast film so that it is still soft when contacted by the embossing cylinder, but it is generally preferred to dry and thereby harden the cast film and then rewet with solvent or plasticiser since this gives a more manageable process. A controlled amount of solvent can for example be sprayed onto the film just before it contacts the embossing cylinder, or the solvent or plasticiser can be carried on the surface of the embossing cylinder before it contacts the film, for example the solvent or plasticiser can be applied by lick roller to that part of the cylinder which is not pressed against the film.

An extruded film can also be softened by application of a solvent or volatile plasticiser to the film before or just as it contacts the embossing cylinder. A polyolefin film, for example, can be softened by a hydrocarbon solvent. An extruded thermoplastics film can alternatively be softened by heat, for example by radiation heating of the film surface which is to contact the embossing cylinder or by radio-frequency induction heating. Softening may be achieved by a combination of heat treatment and application of solvent or plasticiser.

The film is usually embossed on only one surface. It is pressed against the embossing cylinder, preferably by one or more rollers forming a nip with the embossing cylinder. The film can alternatively be embossed on both surfaces by passing it through a nip between two embossing cylinders.

The pattern which is embossed on the film is generally a regular pattern. For example, there may be a pattern of raised lines or grooves on the embossing cylinder arranged as parallel lines or as a grid, such as a grid of intersecting raised lines producing separated raised lines on the film surface, or as a grid of intersecting grooves producing a grid of intersecting raised lines on the film surface. The pattern on the embossing cylinder can alternatively be a regular pattern of raised spots such as lines or dots or a geometrical pattern of dots, producing a pattern of circular depressions in the film surface. Alternatively, the embossing cylinder can have a regular pattern of pits, for example circular pits, so that the embossing surface of the cylinder is formed by the raised areas between the pits, producing a pattern of raised dots on the film surface. The depth of the embossing pattern (the height difference between the embossing members and the lowest surface of the embossing cylinder) is preferably in the range 0.5 to 20 microns, most preferably 1 to 5 or 10 microns, and the depth of pattern embossed on the film surface is preferably in the range 0.5 to 10 microns, most preferably 1 to 5 microns when producing semi-matt film. The width of the embossing features is preferably in the range 10 to 200 microns, most preferably 20 to 125 microns, and these features are preferably spaced apart by a centre-to-centre distance of 20 to 400 microns, most preferably 35 to 260 microns. For example, the embossing pattern can be a series of raised lines 1 to 10 microns high and 20 to 80 microns wide arranged 35 to 260 microns apart, or it can be a pattern of raised dots or circular depressions 1 to 10 microns high and 20 to 125 microns in diameter arranged in lines 35 to 260 microns apart with the centre-to-centre spacing in each line being 35 to 260 microns. In a further embodiment the embossing pattern comprises a regular series of raised dots or circular depressions of depth 0.5 to 10 microns and diameter 20 to 125 microns arranged in lines 20 to 260 microns apart, the dots in each line being spaced apart by a centre-to-centre distance of 35 to 260 microns. Where the embossing pattern is a pattern of raised dots or circular depressions (pits), these can be contiguous, that is with a centre-to-centre distance equal to their diameter, or they can be spaced further apart. The circular features can be arranged in a square, rectangular or hexagonal or other regular geometric pattern, which can be arranged on the embossing cylinder surface at any desired angle to the axis of the cylinder. The embossing features are preferably sharp-edged, that is the sides of each embossing feature are at a high angle to the surface of the embossing cylinder. The surface of the embossing cylinder is preferably of a particularly hard material, for example a hard metal or ceramic material. The regular pattern can be formed on the embossing cylinder surface in the required micron dimensions by laser etching, which can be computer controlled to give a very regular pattern.

Although the pattern on most of the surface area of the embossing cylinder is the regular pattern which gives rise to the noise when the film is rubbed, specific areas of the roller may carry a different emboss pattern or might even be unembossed. The different emboss pattern can for example be a decorative feature or a security mark such as the logo of the perfume house or other luxury goods manufacturer who is to use the film for packaging.

After the film has been embossed it is allowed to harden, for example by drying if it has been softened by solvent or volatile plasticiser or by cooling if it has been softened by heat.

One embodiment of the invention will now be described with reference to the accompanying drawings, of which
Figure 1 is a diagrammatic side elevation of apparatus for casting and embossing a film; and
Figure 2 is a diagrammatic side elevation of the embossing cylinder of Figure 1.

Referring to the drawings, cellulose acetate solution from a reservoir 11 is passed through a pipe 12 to a manifold 13 from which it is cast on a polished stainless steel endless belt 14 travelling in the direction shown. The belt 14 is enclosed within a housing (not shown) from which solvent evaporated from the cast solution can be recovered. At a roller 15 the cellulose acetate film 16 formed is stripped from the belt 14. The film 16 at this stage is clear and transparent. The film 16 is passed around transfer rollers 18 enclosed within a drying oven and as it leaves the last transfer roller 18z it is similar to commercially sold clear cellulose acetate film.

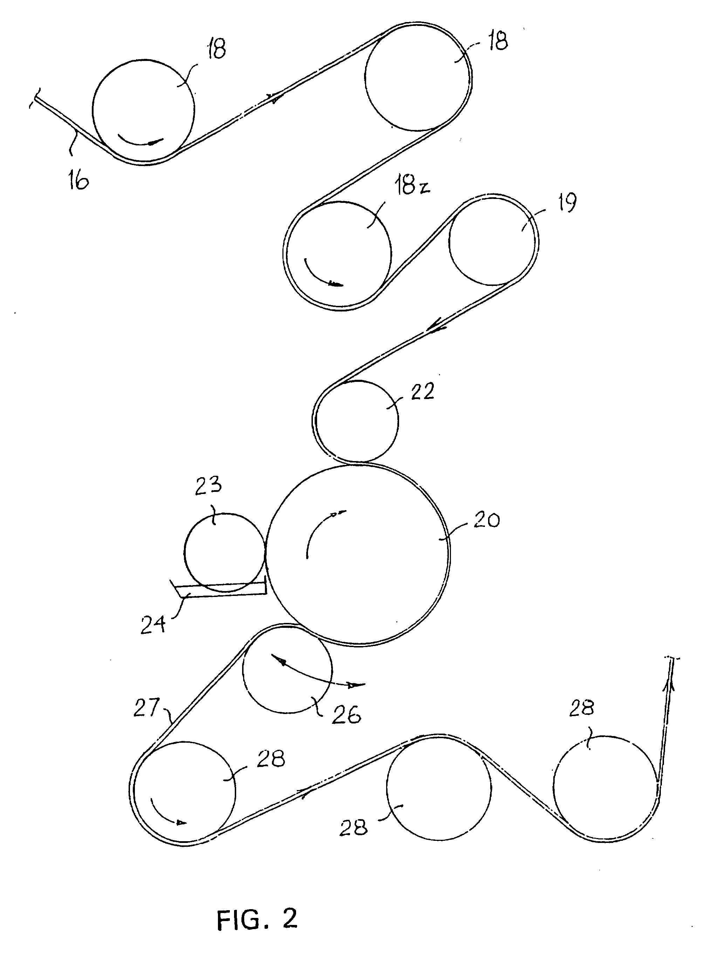

The film 16 then passes around a counter-balanced tension roller 19 to an embossing cylinder 20, shown in more detail in Figure 2. The film 16 passes around a pressure roller 22 which forms a nip with the embossing cylinder 20, rotating in the direction shown. Before the embossing cylinder 20 contacts the film 16 it is contacted by a lick roller 23 which rotates in a bath 24 of softening agent, for example acetone solvent, applying a controlled amount of softening agent to the surface of the cylinder 20. As the film 16 contacts the cylinder 20 it is softened by the solvent carried on the cylinder and is embossed by the cylinder 20. The film 16 is carried around the cylinder 20 in contact with the embossing pattern on its surface until it reaches a stripping roller 26, which does not form a nip with the cylinder 20 but is a swinging roller free to move a short way back and forth around the cylinder 20 in response to changes in tension. At the roller 26 the film, which is now a semi-matt film 27, is lifted off the cylinder and passes to rollers 28, which are enclosed within a drying oven, for hardening the film. After re-drying, the film 27 is wound up on a reel 29.

The semi-matt plastics film of the invention is particularly suitable for laminating over printed paperboard, with its embossed surface outermost, for use in packaging. It can alternatively be used as a packaging material without lamination or as a label material, for example for pressure-sensitive labels and seals. As well as the distinctive noise which can be used as a security packaging feature as described above, and the ability to generate diffraction patterns when laminated over a reflective layer, the semi-matt plastics film can be written on clearly and easily and is highly resistant to finger marking (much more resistant than the semi-matt film presently sold).

The invention is illustrated by the following Example:-

### Example

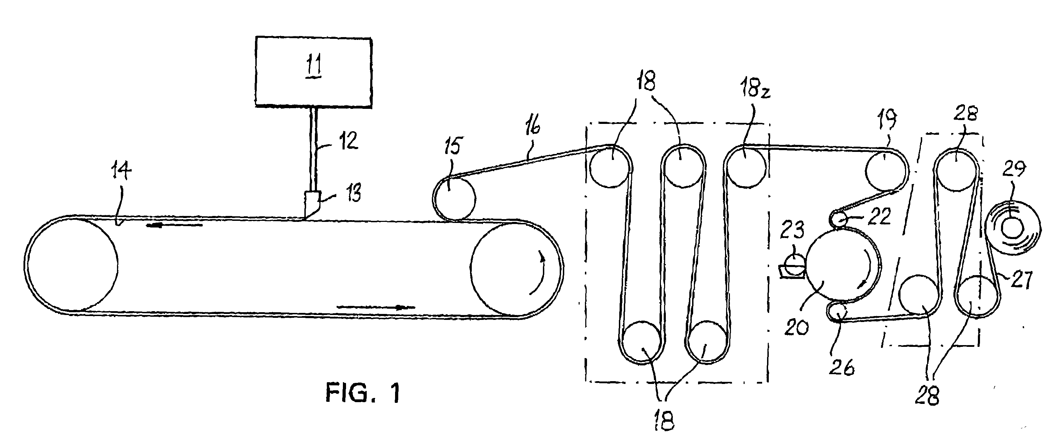

100 parts by weight cellulose acetate and 20 parts by weight diethyl phthalate were dissolved in acetone. The solution was degassed and was cast onto a polished stainless steel belt using the apparatus of Figures 1 and 2. The clear film produced was stripped from the belt and dried to an acetone content of about 1.5% by weight before it contacted the embossing cylinder 20. The thickness of the dry film was 15 microns. Acetone solvent was applied by the lick roller 23 to the surface of the embossing cylinder and hence to the film in an amount of 2 to 3% by weight based on the film. The pattern on the embossing cylinder 20 comprised rows of circular (frusto-conical) pits each 7 microns deep and 20 microns in diameter at the embossing surface. The pits were arranged in rows 40 microns apart in a square pattern. The embossing surface of the cylinder is thus the land area between the pits, producing a pattern of raised dots on the film surface.

After embossing, the film was re-dried (allowed to harden) to an acetone content of 0.8% by weight before being reeled. The resulting semi-matt film had a 60° gloss of 15. The film was laminated to paperboard with its embossed surface outermost. The film emitted a characteristic wailing noise of reproduceable pitch when rubbed against itself before and after being laminated and was highly resistant to finger marking.

Another sample of the embossed film was laminated to metallised paperboard, forming an attractive package material. When a transparent line grating was placed over the laminated packaging material a distinctive diffraction pattern could be seen. No diffraction pattern was seen when the same line grating was placed over clear film laminated to metallised paperboard or over conventional semi-matt film laminated to metallised paperboard.

## Claims

1. A process for the preparation of a laminated product having a surface which is highly resistant to finger marking, **characterised in that** clear plastics film in an unhardened condition is embossed by an embossing cylinder and thereafter allowed to harden, the embossing being of such depth and repeat distance that either the plastics film is capable of giving rise to diffraction patterns or when the plastics film is rubbed it emits a noise of characteristic frequency, and the hardened, embossed film is laminated to paper or board with its embossed surface as the exterior layer of the resulting laminated product.

2. A process according to claim 1, **characterised in that** the film to be embossed is softened by applying a solvent or volatile plasticiser for the plastics to the film.

3. A process according to claim 2, **characterised in that** the solvent or plasticiser is carried on the surface of the embossing cylinder before it contacts the film so that the film is simultaneously softened and embossed as it is pressed against the cylinder.

4. A process according to any of claims 1 to 3, **characterised in that** the clear plastics film is cast film.

5. A process according to claim 4, **characterised in that** the clear plastics film is cellulose acetate film.

6. A process according to claim 1, **characterised in that** the clear plastics film to be embossed is a thermoplastic film and is softened by heat.

7. A process according to any of claims 1 to 6, **characterised in that** the embossing cylinder has an embossing pattern of depth 1 to 10 microns and repeat distance 20 to 260 microns.

8. A process according to claim 7, **characterised in that** the embossing pattern comprises a series of raised dots or circular depressions of depth 0.5 to 10 microns and diameter 20 to 125 microns arranged in lines 35 to 260 microns apart, the dots in each line being spaced apart by a centre-to-centre distance of 35 to 260 microns.

9. A process according to any of claims 1 to 8, **characterised in that** the pattern on the embossing cylinder is formed by computer controlled laser etching.

10. Use of a matt or semi-matt plastics film as the outermost layer of laminated packaging on packaged goods, **characterised in that** the film has a regular embossed pattern of depth 0.5 to 10 microns and repeat distance 20 to 400 microns, either the regularity of the embossed pattern being such that when the plastics film is rubbed it emits a noise of characteristic frequency, or the regularity of the embossed pattern being sufficient that the embossed film is capable of giving rise to a diffraction pattern.

11. Use according to claim 10, **characterised in that** the regularity of the embossed pattern is such that when the plastics film is rubbed it emits a noise of characteristic frequency and specific areas of the film carry a different emboss pattern or are unembossed so that those specific areas form a decorative feature or a security mark.

12. Use according to claim 10, **characterised in that** the regularity of the embossed pattern is sufficient that the embossed film is capable of giving rise to a diffraction pattern and only one surface of the film is embossed, the opposite surface of the film being metallised.

13. Use according to claim 10, **characterised in that** the regularity of the embossed pattern is sufficient that the embossed film is capable of giving rise to a diffraction pattern and the laminating packaging includes a reflective layer visible through the film.

14. Use according to any of claims 10 to 13, **characterised in that** the plastics material is cellulose acetate.

15. Use according to any of claims 10 to 14, **characterised in that** the regular embossed pattern comprises a series of raised dots or circular depressions of depth 0.5 to 10 microns and diameter 20 to 125 microns arranged in lines 35 to 260 microns apart, the dots in each line being spaced apart by a centre-to-centre distance of 35 to 260 microns.

16. A laminated product comprising plastics film laminated to paper or board substrate, **characterised in that** the film has an embossed pattern of depth 0.5 to 10 microns and centre-to-centre repeat distance 20 to 400 microns and is laminated to the substrate with its embossed surface as the outermost layer of the resulting laminated product, so that when the plastics film is rubbed it emits a noise of characteristic frequency and the laminated product is highly resistant to finger marking.

17. A laminated product according to claim 16, **characterised in that** the plastics material is cellulose acetate.

18. A laminated product according to claim 16 or claim 17, **characterised in that** the embossed pattern comprises a regular series of raised dots or circular depressions of depth 0.5 to 10 microns and diameter 20 to 125 microns arranged in lines 35 to 260 microns apart, the dots in each line being spaced apart by a centre-to-centre distance of 35 to 260 microns.

19. A process according to claim 1 for the preparation of a laminated product which is highly resistant to finger marking, **characterised in that** a clear thermoplastics film is softened by heat and the softened film is embossed by means of an embossing cylinder, the embossing being in a regular pattern of depth 0.5 to 10 microns and repeat distance 20 to 400 microns, the embossed softened film is allowed to harden, whereby the hardened embossed film is capable of emitting a noise of characteristic frequency when the film is rubbed against itself and the hardened embossed film is highly resistant to finger marking, and the hardened embossed film having a semi-matt surface is laminated to paper or board with its embossed semi-matt surface as the exterior layer of the resulting laminated product.

20. A process for the preparation of a matt or semi-matt plastics film, **characterised in that** clear plastics film is softened by applying a solvent or volatile plasticiser for the plastics to the film and is embossed by an embossing cylinder and thereafter allowed to harden, the embossing being in a pattern of such depth, repeat distance and regularity that the embossed plastics film is capable of giving rise to diffraction patterns and/or that when the plastics film is rubbed it emits a noise of characteristic frequency.

21. A process according to claim 20, **characterised in that** the solvent or plasticiser is carried on the surface of the embossing cylinder before it contacts the film, so that the film is simultaneously softened and embossed as it is pressed against the cylinder.

22. A process according to claim 20 or claim 21, **characterised in that** the clear plastics film is cast film.

23. A process according to claim 22, **characterised in that** the clear plastics film is cellulose acetate film.

24. A process according to any of claims 20 to 23, **characterised in that** the embossing cylinder has a regular embossing pattern comprising raised dots or pits of depth 1 to 10 microns and diameter 20 to 125 microns arranged in lines 35 to 260 microns apart, with the dots or pits in each line being spaced apart by a centre-to-centre distance of 35 to 260 microns.

25. A process according to any of claims 20 to 24, **characterised in that** the regular pattern on the embossing cylinder is formed by computer-controlled laser etching.

26. A process for testing the authenticity of packaged goods, either **characterised in that** the goods are packaged in a laminated packaging material having a matt or semi=matt plastics film as its outermost layer, the film having a regular embossed pattern of depth 0.5 to 10 microns and repeat distance 20 to 400 microns and the regularity of the embossed pattern being such that when the plastics film is rubbed it emits a noise of characteristic frequency, and the package is rubbed to test whether it emits the noise of characteristic frequency, or **characterised in that** the goods are packaged in a laminated packaging material comprising a reflective layer and a matt or semi-matt plastics film outside the reflective layer, the film having a regular embossed pattern of depth 0.5 to 10 microns and repeat distance 20 to 400 microns and the regularity of the embossed pattern being sufficient that the embossed film is capable of giving rise to a diffraction pattern, and a patterned transparent material having a pattern of closely spaced lines is placed over the package for the purpose of observing whether a diffraction pattern characteristic of the plastics film and the patterned transparent material is visible.

27. A process according to claim 26, **characterised in that** the laminated packaging material includes a layer of substantially rigid paperboard.

28. A process according to claim 26, **characterised in that** the laminated packaging material comprises a reflective layer comprising metallisation on the opposite surface of the film to the embossed surface.

29. A process according to claim 26, **characterised in that** the laminated packaging material comprises a reflective layer comprising metallised paperboard or a metallic foil laminated to paperboard.

## Patentansprüche

1. Verfahren zur Herstellung eines laminierten Produkts mit einer wenig fingerabdruckemfindlichen Oberfläche, **dadurch gekennzeichnet, daß** man eine klare Kunststoffolie im ungehärteten Zustand mit einem Prägezylinder prägt und danach hart werden läßt, wobei das Einprägungsmuster tiefen- und wiederholungsabstandsmäßig so beschaffen ist, daß entweder die Kunststoffolie ein Beugungsmuster ergibt oder die Kunststoffolie beim Reiben ein Geräusch mit einer charakteristischen Frequenz macht, und die gehärtete, eingeprägte Folie auf Papier oder Pappe so auflaminiert ist, daß die eingeprägte Seite der Kunststoffolie die Außenschicht des dabei entstehenden laminierten Produkts bildet.

2. Verfahren nach Anspruch 1, **dadurch gekennzeichnet, daß** man die zu prägende Folie durch Applizierung eines Lösungsmittels oder eines leichtflüchtigen Plastifizierungsmittels für die Kunststoffe erweicht.

3. Verfahren nach Anspruch 2, **dadurch gekennzeichnet, daß** der mit der Folie in Berührung kommende Prägezylinder das Lösungs- bzw. Plastifizierungsmittel schon vorher auf der Oberfläche trägt, so daß die gegen den Zylinder gedrückte Folie gleichzeitig sowohl eine Erweichung als auch eine Einprägung erfährt.

4. Verfahren nach einem der Ansprüche 1 bis 3, **dadurch gekennzeichnet, daß** man als klare Kunststoffolie eine Gußfolie einsetzt.

5. Verfahren nach Anspruch 4, **dadurch gekennzeichnet, daß** man als klare Kunststoffolie eine Celluloseacetatfolie einsetzt.

6. Verfahren nach Anspruch 1, **dadurch gekennzeichnet, daß** man als klare Kunststoffolie eine thermoplastische Folie einsetzt und durch Erwärmen erweicht.

7. Verfahren nach einem der Ansprüche 1 bis 6, **dadurch gekennzeichnet, daß** der Prägezylinder ein Prägemuster der Tiefe 1 bis 10 Mikron und des Wiederholungsabstands 20 bis 260 Mikron aufweist.

8. Verfahren nach Anspruch 7, **dadurch gekennzeichnet, daß** das Prägemuster eine Reihe von erhöhten Punkten oder kreisförmigen Vertiefungen der Tiefe 0,5 bis 10 Mikron und des Durchmessers 20 bis 125 Mikron aufweist, die in 35 bis 260 Mikron voneinander beabstandeten Linien angeordnet sind, wobei die zu den einzelnen Linien gehörenden Punkte jeweils mit einem Abstand Mitte-Mitte von 35 bis 260 Mikron voneinander beabstandet angeordnet sind.

9. Verfahren nach einem der Ansprüche 1 bis 8, **dadurch gekennzeichnet, daß** das Muster auf dem Prägezylinder durch computergesteuertes Laserätzen erzeugt wird.

10. Verwendung einer matten oder halbmatten Kunststoffolie als äußerste Schicht einer laminierten Verpackung von verpackten Waren, **dadurch gekennzeichnet, daß** die Folie ein regelmäßiges Einprägungsmuster der Tiefe 0,5 bis 10 Mikron und des Wiederholungsabstands 20 bis 400 Mikron aufweist, wobei die Regelmäßigkeit des Einprägungsmusters entweder so beschaffen ist, daß die Kunststoffolie beim Reiben ein Geräusch mit einer charakteristischen Frequenz macht, oder so stark ist, daß die eingeprägte Folie ein Beugungsmuster ergibt.

11. Verwendung nach Anspruch 10, **dadurch gekennzeichnet, daß** die Regelmäßigkeit des Einprägungsmusters so beschaffen ist, daß die Kunststoffolie beim Reiben ein Geräusch mit einer charakteristischen Frequenz macht und spezielle Bereiche der Folie ein unterschiedliches Einprägungsmuster tragen oder nicht eingeprägt sind, so daß diese speziellen Bereiche ein dekoratives Merkmal oder eine Sicherheitsmarkierung bilden.

12. Verwendung nach Anspruch 10, **dadurch gekennzeichnet, daß** die Regelmäßigkeit des Einprägungsmustes so stark ist, daß die eingeprägte Folie ein Beugungsmuster ergibt und die Folie nur auf einer Seite eingeprägt ist, wobei die andere Seite der Folie metallisiert ist.

13. Verwendung nach Anspruch 10, **dadurch gekennzeichnet, daß** die Regelmäßigkeit des Einprägungsmusters so stark ist, daß die eingeprägte Folie ein Beugungsmuster ergibt und die laminierte Verpackung einen durch die Folie hindurch sichtbare Reflexionsschicht umfaßt.

14. Verwendung nach einem der Ansprüche 10 bis 13, **dadurch gekennzeichnet, daß** es sich bei dem Kunststoff um Celluloseacetat handelt.

15. Verwendung nach einem der Ansprüche 10 bis 14, **dadurch gekennzeichnet, daß** das regelmäßige Prägemuster eine Reihe von erhöhten Punkten oder kreisförmigen Vertiefungen der Tiefe 0,5 bis 10 Mikron und des Durchmessers 20 bis 125 Mikron aufweist, die in 35 bis 260 Mikron voneinander beabstandeten Linien angeordnet sind, wobei die zu den einzelnen Linien gehörenden Punkte jeweils mit einem Abstand Mitte-Mitte von 35 bis 260 Mikron voneinander beabstandet angeordnet sind.

16. Laminiertes Produkt mit einer auf einem Papieroder Pappsubstrat auflaminierten Kunststoffolie, **dadurch gekennzeichnet, daß** die Folie ein Einprägungsmuster der Tiefe 0,5 bis 10 Mikron und des Wiederholungsabstands Mitte-Mitte 20 bis 400 Mikron aufweist und die eingeprägte Seite auf das Substrat so auflaminiert ist, daß die Kunststoffolie beim Reiben ein Geräusch mit einer charakteristischen Frequenz macht und das laminierte Produkt wenig fingerabdruckempfindlich ist.

17. Laminiertes Produkt nach Anspruch 16, **dadurch gekennzeichnet, daß** es sich bei dem Kunststoff um Celluloseacetat handelt.

18. Laminiertes Produkt nach Anspruch 16 oder Anspruch 17, **dadurch gekennzeichnet, daß** das Einprägungsmuster eine Reihe von erhöhten Punkten oder kreisförmigen Vertiefungen der Tiefe 0,5 bis 10 Mikron und des Durchmessers 20 bis 125 Mikron aufweist, die in 35 bis 260 Mikron voneinander beabstandeten Linien angeordnet sind, wobei die zu den einzelnen Linien gehörenden Punkte jeweils mit einem Abstand Mitte-Mitte von 35 bis 260 Mikron voneinander beabstandet angeordnet sind.

19. Verfahren nach Anspruch 1 zur Herstellung eines laminierten Produkts mit geringer Fingerabdruckempfindlichkeit, **dadurch gekennzeichnet, daß** man eine klare Folie aus thermoplastischem Kunststoff durch Erwärmen erweicht und mit einem Prägezylinder prägt, wobei das Einprägen in einem regelmäßigen Muster der Tiefe 0,5 bis 10 Mikron und des Wiederholungsabstands 20 bis 400 Mikron erfolgt, wieder hart werden läßt, wodurch die wieder hart gewordene eingeprägte Folie beim Reiben gegen sich selbst ein Geräusch mit einer charakteristischen Frequenz macht und wenig fingerabdruckempfindlich ist, und mit einer halbmatten Oberfläche auf Papier oder Pappe so auflaminiert, daß ihre eingeprägte halbmatte Oberfläche die Außenschicht des dabei entstehenden laminierten Produkts bildet.

20. Verfahren zur Herstellung einer matten oder halbmatten Kunststoffolie, **dadurch gekennzeichnet, daß** man die klare Kunststoffolie durch Applizierung eines Lösungsmittels oder eines leichtflüchtigen Plastifizierungsmittels für die Kunststoffe erweicht und mit einem Prägezylinder prägt und danach wieder hart werden läßt, wobei das Prägen tiefen-, wiederholungsabstands- und regelmäßigkeitsbezogen in einem Muster erfolgt, daß die eingeprägte Kunststoffolie Beugungsmuster ergibt und/oder beim Reiben ein Geräusch mit einer charakteristischen Frequenz macht.

21. Verfahren nach Anspruch 20, **dadurch gekennzeichnet, daß** der mit der Folie in Berührung kommende Prägezylinder das Lösungs- bzw. Plastifizierungsmittel schon vorher auf der Oberfläche trägt, so daß die gegen den Zylinder gedrückte Folie gleichzeitig sowohl eine Erweichung als auch eine Einprägung erfährt.

22. Verfahren nach Anspruch 20 oder Anspruch 21, **dadurch gekennzeichnet, daß** man als klare Kunststoffolie eine Gußfolie einsetzt.

23. Verfahren nach Anspruch 22, **dadurch gekennzeichnet, daß** man als klare Kunststoffolie eine Celluloseacetatfolie einsetzt.

24. Verfahren nach einem der Ansprüche 20 bis 23, **dadurch gekennzeichnet, daß** das Prägemuster eine Reihe von erhöhten Punkten oder Kratern der Tiefe 1 bis 10 Mikron und des Durchmessers 20 bis 125 Mikron aufweist, die in 35 bis 260 Mikron voneinander beabstandeten Linien angeordnet sind, wobei die zu den einzelnen Linien gehörenden Punkte oder Krater jeweils mit einem Abstand Mitte-Mitte von 35 bis 260 Mikron voneinander beabstandet angeordnet sind.

25. Verfahren nach einem der Ansprüche 20 bis 24, **dadurch gekennzeichnet, daß** das regelmäßige Muster auf dem Prägezylinder durch computergesteuertes Laserätzen erzeugt wird.

26. Verfahren zur Echtheitskontrolle verpackter Waren, **gekennzeichnet** entweder dadurch, daß man die Waren in einem laminierten Packmittel mit einer matten oder halbmatten Kunststoffolie als äußerste Schicht verpackt, wobei die Folie ein regelmäßiges Einprägungsmuster der Tiefe 0,5 bis 10 Mikron und des Wiederholungsabstands 20 bis 400 Mikron aufweist, wobei die Regelmäßigkeit des Einprägungsmusters so beschaffen ist, daß die Kunststoffolie beim Reiben ein Geräusch mit einer charakteristischen Frequenz macht, und die Verpackung reibt, um zu prüfen, ob sie das Geräusch mit der charakteristischen Frequenz macht, oder dadurch, daß man die Waren in einem laminierten Packmittel mit einer Reflexionsschicht und einer matten oder halbmatten Kunststoffolie als äußerste Schicht verpackt, wobei die Folie ein regelmäßiges Einprägungsmuster der Tiefe 0,5 bis 10 Mikron und des Wiederholungsabstands 20 bis 400 Mikron aufweist, wobei die Regelmäßigkeit des Einprägungsmusters so stark ist, daß die eingeprägte Folie ein Beugungsmuster ergibt, und über die Verpackung ein mit dicht aneinander angeordneten Linien bemustertes transparentes Material hält, um zu sehen, ob ein für die Kunststoffolie und das bemusterte transparente Material charakteristische Beugungsmuster erkennbar ist.

27. Verfahren nach Anspruch 26, **dadurch gekennzeichnet, daß** das laminierte Packmittel eine Schicht aus einer im wesentlichen biegesteifer Pappe umfaßt.

28. Verfahren nach Anspruch 26, **dadurch gekennzeichnet, daß** das laminierte Packmittel eine Reflexionsschicht umfaßt, die zumindest teilweise aus einer auf der der eingeprägten Oberfläche der Folie gegenüberliegenden Seite aufgebrachte Metallisierung besteht.

29. Verfahren nach Anspruch 26, **dadurch gekennzeichnet, daß** das laminierte Packmittel eine Reflexionsschicht umfaßt, die zumindest teilweise aus metallisierter Pappe oder einer auf Pappe auflaminierten Metallfolie besteht.

## Revendications

1. Procédé de préparation d'un produit stratifié comportant une surface qui est très résistante aux marques de doigts, **caractérisé en ce qu'**un film en matière plastique transparent en condition non durcie est gaufré par un cylindre à gaufrer, puis laissé à durcir, le gaufrage étant fait à une profondeur et à une distance répétée telles que soit le film en matière plastique est capable d'engendrer des motifs de diffraction, soit, si le film en matière plastique est frotté, il émet un bruit de fréquence caractéristique, et le film gaufré durci est stratifié sur du papier ou du carton, sa surface gaufrée constituant la couche extérieure du produit stratifié ainsi obtenu.

2. Procédé selon la revendication 1, **caractérisé en ce que** le film à gaufrer est ramolli par application sur le film d'un solvant ou d'un plastifiant volatil pour la matière plastique.

3. Procédé selon la revendication 2, **caractérisé en ce que** le solvant ou le plastifiant est porté sur la surface du cylindre à gaufrer avant sa mise en contact avec le film, de sorte que le film soit simultanément ramolli et gaufré au moment où il est appuyé contre le cylindre.

4. Procédé selon l'une quelconque des revendications 1 à 3, **caractérisé en ce que** le film en matière plastique transparent est un film coulé.

5. Procédé selon la revendication 4, **caractérisé en ce que** le film en matière plastique transparent est un film d'acétate de cellulose.

6. Procédé selon la revendication 1, **caractérisé en ce que** le film en matière plastique transparent à gaufrer est un film thermoplastique et est ramolli à la chaleur.

7. Procédé selon l'une quelconque des revendications 1 à 6, **caractérisé en ce que** le cylindre à gaufrer possède un motif de gaufrage dont la profondeur est de 1 à 10 microns et dont la distance répétée est de 20 à 260 microns.

8. Procédé selon la revendication 7, **caractérisé en ce que** le motif de gaufrage comprend une série de points en élévation ou de creux circulaires de profondeur 0,5 à 10 microns et de diamètre 20 à 125 microns, placés en lignes distantes de 35 à 260 microns, les points dans chaque ligne étant distants d'une distance centre à centre de 35 à 260 microns.

9. Procédé selon l'une quelconque des revendications 1 à 8, **caractérisé en ce que** le motif sur le cylindre à gaufrer est formé par gravure au laser commandée par ordinateur.

10. Utilisation d'un film en matière plastique mat ou semi-mat comme couche extérieure d'un emballage stratifié sur des denrées emballées, **caractérisée en ce que** le film a un motif gaufré régulier de profondeur 0,5 à 10 microns et une distance répétée de 20 à 400 microns, dans laquelle ou bien la régularité du motif gaufré est telle que, si le film en matière plastique est frotté, il émet un bruit de fréquence caractéristique, ou bien la régularité du motif gaufré est suffisante pour que le film gaufré soit capable d'engendrer un motif de diffraction.

11. Utilisation selon la revendication 10, **caractérisée en ce que** la régularité du motif gaufré est telle que, si le film en matière plastique est frotté, il émet un bruit de fréquence caractéristique et des zones spécifiques du film portent un motif de gaufrage différent ou bien ne sont pas gaufrées pour que ces zones spécifiques forment un attribut décoratif ou une marque de sécurité.

12. Utilisation selon la revendication 10, **caractérisée en ce que** la régularité du motif gaufré est suffisante pour que le film gaufré soit capable d'engendrer un motif de diffraction et une seule surface du film est gaufrée, la surface opposée du film étant métallisée.

13. Utilisation selon la revendication 10, **caractérisée en ce que** la régularité du motif gaufré est suffisante pour que le film gaufré soit capable d'engendrer un motif de diffraction et l'emballage stratifié contient une couche réfléchissante visible à travers le film.

14. Utilisation selon l'une quelconque des revendications 10 à 13, **caractérisée en ce que** la matière plastique est de l'acétate de cellulose.

15. Utilisation selon l'une quelconque des revendications 10 à 14, **caractérisée en ce que** le motif gaufré régulier comprend une série de points en élévation ou de creux circulaires de profondeur 0,5 à 10 microns et de diamètre 20 à 125 microns, placés en lignes distantes de 35 à 260 microns, les points dans chaque ligne étant distants d'une distance centre à centre de 35 à 260 microns.

16. Produit stratifié comprend un film en matière plastique stratifié sur un substrat en papier ou en carton, **caractérisé en ce que** le film possède un motif gaufré dont la profondeur est de 0,5 à 10 microns et dont la distance répétée centre à centre est de 20 à 400 microns et est stratifié sur le substrat de manière que sa surface gaufrée soit la couche extérieure du produit stratifié ainsi obtenu, de telle sorte que, si le film en matière plastique est frotté, il émette un bruit de fréquence caractéristique, et que le produit stratifié soit très résistant aux marques de doigts.

17. Produit stratifié selon la revendication 16, **caractérisé en ce que** la matière plastique est de l'acétate de cellulose.

18. Produit stratifié selon la revendication 16 ou la revendication 17, **caractérisé en ce que** le motif gaufré comprend une série régulière de points en élévation ou de creux circulaires de profondeur 0,5 à 10 microns et de diamètre 20 à 125 microns, placés en lignes distantes de 35 à 260 microns, les points dans chaque ligne étant distants d'une distance centre à centre de 35 à 260 microns.

19. Procédé selon la revendication 1 pour la préparation d'un produit stratifié qui est très résistant aux marques de doigts, **caractérisé en ce qu'**un film en matière plastique transparent est ramolli par de la chaleur et le film ramolli est gaufré au moyen d'un cylindre à gaufrer, le gaufrage étant à motif régulier de profondeur 0,5 à 10 microns et de distance répétée 20 à 400 microns, le film ramolli gaufré est laissé à durcir, moyennant quoi le film gaufré durci est capable d'émettre un bruit de fréquence caractéristique lorsque le film est frotté contre lui-même et le film gaufré durci est très résistant aux marques de doigts, et le film gaufré durci ayant une surface semi-mate est stratifié sur du papier ou du carton de manière que sa surface semi-mate gaufrée soit la couche extérieure du produit stratifié ainsi obtenu.

20. Procédé de préparation d'un film en matière plastique mat ou semi-mat, **caractérisé en ce que** le film en matière plastique transparent est ramolli par application sur le film d'un solvant ou d'un plastifiant volatil pour la matière plastique et est gaufré par un cylindre à gaufrer, puis laissé à durcir, le gaufrage étant fait selon un motif ayant une profondeur, une distance répétée et une régularité telles que le film en matière plastique gaufré soit capable d'engendrer des motifs de diffraction et/ou que, si le film en matière plastique est frotté, il émette un bruit de fréquence caractéristique.

21. Procédé selon la revendication 20, **caractérisé en ce que** le solvant ou le plastifiant est porté sur la surface du cylindre à gaufrer avant sa mise en contact avec le film, de sorte que le film soit simultanément ramolli et gaufré au moment où il est appuyé contre le cylindre.

22. Procédé selon la revendication 20 ou la revendication 21, **caractérisé en ce que** le film en matière plastique transparent est un film coulé.

23. Procédé selon la revendication 22, **caractérisé en ce que** le film en matière plastique transparent est un film d'acétate de cellulose.

24. Procédé selon l'une quelconque des revendications 20 à 23, **caractérisé en ce que** le cylindre à gaufrer a un motif de gaufrage régulier comprenant des points en élévation ou des cratères de profondeur 1 à 10 microns et de diamètre 20 à 125 microns, placés en lignes distantes de 35 à 260 microns, les points ou les cratères dans chaque ligne étant distants d'une distance centre à centre de 35 à 260 microns.

25. Procédé selon l'une quelconque des revendications 20 à 24, **caractérisé en ce que** le motif régulier sur le cylindre de gaufrage est formé par gravure au laser commandée par ordinateur.

26. Procédé pour tester l'authenticité de denrées emballées, soit **caractérisé en ce que** les denrées sont emballées dans un matériau d'emballage stratifié comportant un film en matière plastique mat ou semi-mat comme couche extérieure, le film ayant un motif gaufré régulier de profondeur 0,5 à 10 microns et de distance répétée 20 à 400 microns, et la régularité du motif gaufré étant telle que, si le film en matière plastique est frotté, il émette un bruit de fréquence caractéristique, et l'emballage est frotté pour tester s'il émet le bruit de fréquence caractéristique, soit **caractérisé en ce que** les denrées sont emballées dans un matériau d'emballage stratifié comprenant une couche réfléchissante et un film en matière plastique mat ou semi-mat à l'extérieur de la couche réfléchissante, le film ayant un motif gaufré régulier de profondeur 0,5 à 10 microns et de distance répétée 20 à 400 microns, et la régularité du motif gaufré étant suffisante pour que le film gaufré soit capable d'engendrer un motif de diffraction, et un matériau transparent à motif ayant un motif formé de lignes rapprochées est placé par dessus l'emballage dans le but d'observer si un motif de diffraction caractéristique du film en matière plastique et du matériau transparent à motifs est visible.

27. Procédé selon la revendication 26, **caractérisé en ce que** le matériau d'emballage stratifié comprend une couche de carton essentiellement rigide.

28. Procédé selon la revendication 26, **caractérisé en ce que** le matériau d'emballage stratifié comprend une couche réfléchissante comprenant une métallisation sur la surface du film opposée à la surface gaufrée.

29. Procédé selon la revendication 26, **caractérisé en ce que** le matériau d'emballage stratifié comprend une couche réfléchissante comprenant du carton métallisé ou une feuille métallique stratifiée sur du carton.
